**Europäisches Patentamt**

**European Patent Office**

**Office européen des brevets**

(19)

(11) Veröffentlichungsnummer : **0 406 577 B1**

(12) **EUROPÄISCHE PATENTSCHRIFT**

(45) Veröffentlichungstag der Patentschrift :
25.08.93 Patentblatt 93/34

(51) Int. Cl.$^5$ : **B65G 53/56**

(21) Anmeldenummer : **90110775.5**

(22) Anmeldetag : **07.06.90**

(54) **Drehschieberweiche.**

(30) Priorität : 06.07.89 DE 3922240

(43) Veröffentlichungstag der Anmeldung :
09.01.91 Patentblatt 91/02

(45) Bekanntmachung des Hinweises auf die
Patenterteilung :
25.08.93 Patentblatt 93/34

(84) Benannte Vertragsstaaten :
BE CH DE FR GB LI NL

(56) Entgegenhaltungen :
FR-A- 819 648

(73) Patentinhaber : ZEPPELIN
SCHÜTTGUTTECHNIK GmbH
Birkenweg 4
D-88250 Weingarten (DE)

(72) Erfinder : Krambrock, Wolfgang, Dipl.-Ing.
Aichenwiesen 18
D-7981 Vogt (DE)

(74) Vertreter : Patentanwälte Dipl.-Ing. E. Eisele
Dr.-Ing. H. Otten
Seestrasse 42
D-88214 Ravensburg (DE)

EP 0 406 577 B1

Jouve, 18, rue Saint-Denis, 75001 PARIS

## Beschreibung

Die Erfindung betrifft eine Drehschieberweiche nach dem Oberbegriff des Anspruchs 1.

Eine Drehschieberweiche der gattungsgemäßen Art ist beispielsweise aus der DE-OS 37 30 419 bekannt. Dieser Dreiweg-Drehschieber besitzt ein zylindrisches Drehküken, welches im Zentrum seiner beiden Stirnflächen drehbar in einem Drehschiebergehäuse gelagert ist. Die Drehschieberweiche dient zur Verbindung einer ersten und zweiten, miteinander fluchtenden Anschlußleitung und - bei Drehung des Drehkükens - zur Verbindung einer von der ersten Anschlußleitung winklig abzweigenden dritten Anschlußleitung mit der ersten. Dabei ist der kreisförmige Querschnitt der ersten Anschlußleitung sowie der kreisförmige Querschnitt der daran anschließenden Drehküken-Durchgangsbohrung bei winkliger Abzweigung nicht deckungsgleich ausgebildet, d. h., es tritt in dieser Weichenstellung an dieser Stelle eine Veränderung des Förderquerschnitts auf, wodurch kein stoßfreier Weichendurchgang möglich wird.

Eine ähnlich aufgebaute Drehschieberweiche ist aus dem deutschen Gebrauchsmuster GM 88 11 639 bekannt.

Bei all diesen und auch sonst bekannten Drehschieberweichen liegt das zylindrische Drehküken in einem entsprechend angepaßten zylindrischen Gehäuse. Die Durchgangsbohrung durch das Drehküken ist geradlinig ausgeführt und soll möglichst den gleichen runden Durchmesser haben, wie die verschiedenen Anschlußleitungen, um eine Querschnittsveränderung zu vermeiden.

Wie aus den zuvor genannten Druckschriften ersichtlich, erfolgt der Übergang zwischen den einzelnen Anschlußleitungen zum Drehküken auf der durch das Drehküken gebildeten Zylindermantelfläche. Bei dem fluchtenden, geradlinigen Durchgang von der ersten zur zweiten Anschlußleitung gibt es keine Anpassungsprobleme der Übergangsquerschnitte. Wie bereits erwähnt, gilt dies jedoch nicht für die Stellung, in welcher das Drehküken für eine winklige Abzweigung eingestellt ist. Hier ergibt sich stets die Schwierigkeit bzw. der Nachteil, daß der auf der Zylindermantelfläche des Drehkükens liegende Anschlußquerschnitt der Durchgangsbohrung im Drehküken nicht exakt übereinstimmt bzw. deckungsgleich ist mit dem Anschlußquerschnitt der ersten Anschlußleitung im Drehschiebergehäuse. Es ist deshalb erforderlich, diese Anschlußleitungen im Gehäuse in ihrem seitlichen Bereich etwas aufzufüttern, um wenigstens in einer Förderrichtung durch die Drehschieberweiche einen stoßfreien Durchgang zu erhalten. Verstellt man das Drehküken dann wieder in die geradlinige Durchlaßrichtung, so ist die Auffütterung zwar nicht mehr erforderlich, aber als Nachteil dafür verantwortlich, daß jetzt nur noch in einer Förderrichtung ein stoßfreier Durchgang durch die Drehschieberweiche möglich ist und als weiterer Nachteil im Bereich der Auffütterung eine Querschnittsverengung vorhanden ist.

Der Erfindung liegt die Aufgabe zugrunde, eine Drehschieberweiche mit drei Anschlüssen gleichen Querschnitts und runden Durchgängen vorzuschlagen, bei welcher eine Auffütterung der zu der abzweigenden Anschlußleitung führenden ersten Anschlußleitung nicht erforderlich ist. Eine weitere Aufgabe liegt darin, einen möglichst stoßfreien ungehinderten Durchgang ohne wesentliche Querschnittsveränderungen durch die Drehschieberweiche in den beiden fluchtenden Anschlußleitungen in allen Förderrichtungen zu ermöglichen.

Diese Aufgabe wird ausgehend von einer Drehschieberweiche der einleitend bezeichneten Art erfindungsgemäß durch die kennzeichnenden Merkmale des Anspruchs 1 gelöst. Durch die in den Unteransprüchen aufgeführten Merkmale sind vorteilhafte Weiterbildungen und Verbesserungen der erfindungsgemäßen Drehschieberweiche möglich.

Der Erfindung liegt der Kerngedanke zugrunde, daß zwei in einem beliebigen Winkel zusammenstoßende Rohre gleichen Durchmessers nur dann eine gemeinsame, deckungsgleiche Schnittebene bilden, wenn diese Ebene in der Ebene der Winkelhalbierenden der sich kreuzenden Mittellängsachsen liegt. Aus der darstellenden Geometrie ist diese Konstruktion als sogenanntes Rohrknie bekannt, d. h. ein solches Rohrknie wird z. B. gebildet, indem ein Zylinderrohr eben durchschnitten und der abgeschnittene Teil um 180° gedreht und auf die gemeinsame elliptische Schnittebene wieder aufgesetzt wird. Bei der vorliegenden Erfindung wird demnach die Berührungsfläche der ankommenden ersten Rohrleitung und die der Durchgangsbohrung durch das Drehküken derart versetzt angeordnet, daß diese auf der gemeinsamen ebenen elliptischen Schnittfläche liegen, wie dies bei der Bildung eines bekannten Rohrknies in der Schnittebene der Winkelhalbierenden der Fall ist. Hierzu muß aber die Rohrgeometrie bzw. die Rohrform der ersten Anschlußleitung im Drehschiebergehäuse fortgeführt werden in den segmentartigen Abschnitt des Drehkükens, bis zur ebenen elliptischen Schnittfläche. Weiterhin darf die Durchgangsbohrung durch das Drehküken ebenfalls in ihrer Formgebung nur bis zur elliptischen Schnittfläche reichen und nicht - wie sonst üblich - bis zur Zylindermantelfläche. Bei der vorliegenden Erfindung liegt demnach die Berührungsfläche zwischen der ankommenden ersten Anschlußleitung des Drehkükengehäuses und der abknickenden Durchgangsbohrung durch das Drehküken nicht auf der zylindrischen Mantelfläche des Kükens, sondern auf der ebenen elliptischen Schnittfläche der Winkelhalbierenden bei schrägem Rohrabgang innerhalb des Drehkükens. Nur so kann erreicht werden, daß sich die in einem Winkel kreuzenden Rohrleitungen in einer einzigen, gemeinsamen, nämlich elliptischen Schnittfläche

EP 0 406 577 B1

deckungsgleich treffen. Eine Auffütterung der Anschlußleitung im Anschlußgehäuse in den Bereichen, die bislang nicht deckungsgleich waren, erübrigt sich daher, da die Anschlußleitung ja in ihrem Querschnitt exakt im Drehküken bis zur gemeinsamen deckungsgleichen elliptischen Schnittfläche fortgesetzt wird.

Dreht man das Drehküken in den Bereich des fluchtenden, geradlinigen Durchgangs zwischen der ersten und zweiten Anschlußleitung, so gelangt die erfindungsgemäß angepaßte elliptische Schnittfläche, durch die Drehbewegung des Drehkükens, zur zweiten Anschlußleitung. Da in diesem Fall der Anschlußquerschnitt im Drehküken nicht mit dem Anschlußquerschnitt in der zweiten Anschlußleitung übereinstimmt, muß eine entsprechende geometrische Anpassung im Drehschiebergehäuse in diesem Bereich vorgenommen werden. Dies geschieht durch eine deckungsgleiche geometrische Anpassung der zweiten Anschlußleitung im Drehschiebergehäuse gegenüber dem Austrittsquerschnitt am Umfang des auf geraden Durchgang durch die Drehschieberweiche geschalteten Drehkükens.

Die dritte, winklig abzweigende Anschlußleitung wird vorteilhafterweise in der, durch die Durchgangsbohrung im Drehküken vorgegebenen Richtung geradlinig fortgesetzt. Hierdurch ist es möglich, daß die Drehkükenbohrung und die dritte Anschlußleitung mit ihrer Bohrung geradlinig fluchtend fortgesetzt werden können, d. h. die deckungsgleichen Durchgangsquerschnitte der beiden Bohrungen stoßen wiederum auf der Zylindermantelfläche des Drehkükens zusammen. Schwenkt man diese Öffnung, zur Bildung eines fluchtenden Durchgangs, zur ersten Anschlußleitung, so liegen wiederum deckungsgleiche Durchgangsquerschnitte auf der Zylindermantelfläche vor.

Durch die exzentrische Versetzung der Kreismittellinie des Drehkükens gegenüber der parallel liegenden Rohrmittelachse der fluchtenden ersten und zweiten Anschlußleitung wird die vorteilhafte Anschlußmöglichkeit des Drehkükens mit einer gleich großen Innenbohrung wie die der Anschlußleitungen gegeben.

Vorteilhaft ist weiterhin die Verwendung einer Zylinderbüchse für das Drehküken, mit einer eingegossenen Rohrkniegeometrie entsprechend den vorausgegangenen Ausführungen.

Weitere Vorteile und Einzelheiten sind in der nachfolgenden Beschreibung der Erfindung angegeben und anhand der Figurenbeschreibung näher erläutert. Es zeigen

Fig. 1     eine erfindungsgemäße Drehschieberweiche mit abgewinkelter Durchgangsstellung des Drehkükens,

Fig. 2     die Drehschieberweiche nach Fig. 1 in geradliniger Durchgangsstellung und

Fig. 3     eine Projektion auf die Querschnitte im Bereich der zweiten Anschlußleitung zum Drehküken gemäß Fig. 2.

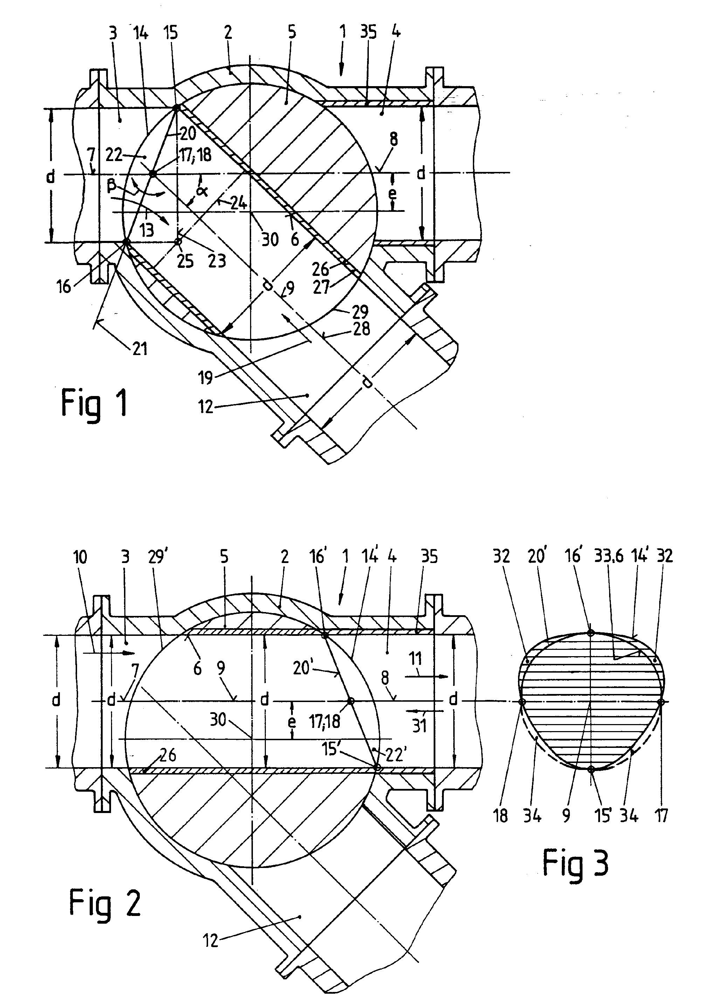

Die in den Figuren 1 und 2 dargestellte Drehschieberweiche 1 besteht aus einem stationären Gehäuse 2 mit einer ersten Anschlußleitung 3 und einer hiermit fluchtenden weiteren Anschlußleitung 4 mit gleichem Durchmesser d, die über eine Durchgangsbohrung 6 im Drehküken 5 in der fluchtenden Stellung gemäß Fig. 2 miteinander verbindbar sind. Die Durchgangsbohrung 6 des Drehkükens weist dabei ebenfalls den Durchmesser d auf. Die Rohrmittelachse 7 der ersten Anschlußleitung 3 und die Rohrmittelachse 8 der zweiten Anschlußleitung 4 fluchten mit der Rohrmittelachse 9 des Drehkükens 5 in der Stellung gemäß Fig. 2. Gemäß Fig. 2 erfolgt demnach der Materialtransport von der ersten Anschlußleitung 3 (Pfeil 10) über die Durchgangsbohrung 6 des Drehkükens 5 zur zweiten Anschlußleitung 4 (Pfeil 11) oder umgekehrt (Pfeil 31). Bei einem solchen geradlinigen Durchgang benötigt das Drehküken lediglich eine geradlinige, im Querschnitt unveränderte runde Durchgangsbohrung 6, wie auch aus dem Stand der Technik her bekannt.

In der Stellung der Drehschieberweiche nach Fig. 1 soll der Materialstrom von der ersten Anschlußleitung 3 zur abzweigenden dritten Anschlußleitung 12, d. h. in Richtung Pfeil 13 oder umgekehrt (Pfeil 19) transportiert werden. Hierfür ist die Durchgangsbohrung 6 entsprechend abgewinkelt angeordnet, so daß die Rohrmittelachse 9 des Drehkükens mit den fluchtenden Rohrmittelachsen 7, 8 einen Winkel $\alpha$ einschließt. Der Ergänzungswinkel zu 180° ist mit $\beta$ bezeichnet.

Bei normalen, bekannten Drehschieberweichen treffen sich die Rohrquerschnitte der ersten Anschlußleitung 3 und der Durchgangsbohrung 6 auf der dreidimensionalen Zylindermantelfläche 14 des Drehkükens 5. Die beiden sich auf der Zylindermantelfläche 14 gegenüberliegenden Rohrquerschnitte der Anschlußleitung 3 und der Durchgangsbohrung 6 sind jedoch aufgrund der unterschiedlichen Zylinderschnitte nur in dem in Fig. 1 dargestellten oberen Punkt 15, und dem unteren Punkt 16 deckungsgleich. Im übrigen sind die Querschnitte der Anschlußleitung 3 sowie der Durchgangsbohrung 6 im Bereich der Zylindermantel-Berührungsfläche 14 nicht deckungsgleich, d. h. auch in den beiden gegenüberliegenden Punkten 17, 18, so daß bei bekannten Drehschieberweichen eine Auffütterung des Rohrinneren der ersten Anschlußleitung in gewissen Bereichen notwendig ist, um wenigstens in Förderrichtung 13 einen stoßfreien Durchgang durch die Drehschieberweiche zu bekommen. Diese Auffütterung der Anschlußleitung 3 zur Angleichung der unterschiedlichen Durchgangsquerschnitte entlang der Zylindermantelfläche 14 hat jedoch den Nachteil, daß sie den Querschnitt verengt und daß bei einer Strömung des Materials von der dritten Anschlußleitung 12 zur ersten Anschlußleitung 3 (Pfeil 19) die Stoßkante der Materialauffütterung in der ersten Anschlußleitung dem Materialstrom entgegensteht.

Erfindungsgemäß wird deshalb, nach Art eines bekannten Rohrknies, die Berührungsebene der ersten Anschlußleitung 3 und der Durchgangsbohrung 6 von der Zylindermantelfläche 14 weg auf die ebene elliptische Schnittfläche 20 gelegt, denn zwei aneinanderstoßende, maßgleiche Rohre 3, 6 haben nur dann eine gemeinsame deckungsgleiche elliptische Schnittebene 20, wenn diese Schnittebene 20 auf der Winkelhalbierenden 21 des Winkels β liegt. Hierbei ist

$$\beta = 180° - \alpha .$$

Diese aus der darstellenden Geometrie bekannte Erkenntnis, wird erfindungsgemäß auf die Konstruktion einer Drehschieberweiche übertragen. Hierfür muß die Rohrgeometrie der ersten Anschlußleitung 3 räumlich bis in das Segment 22 des Drehkükens 5 bis zur Schnittlinie der elliptischen Schnittfläche 20 auf der Winkelhalbierenden 21 fortgesetzt werden. Gleichermaßen darf die Rohrgeometrie der Bohrung 6 durch das Drehküken 5 auch nur bis zur elliptischen Schnittfläche 20 auf der Winkelhalbierenden 21 reichen. Ersteres könnte als Gedankenansatz beispielsweise dadurch geschehen, indem ein Bohrwerkzeug mit dem Durchmesser d längs der Rohrmittelachse 7 bis zu der in Fig. 1 eingezeichneten Ebene 23 einfährt, um noch den obersten Punkt 15 zu erreichen. Hieraus ist jedoch ersichtlich, daß die Durchgangsbohrung 6 nur bis zur Ebene 24 fortgeführt werden könnte, damit sich die beiden Ebenen 23, 24 im gemeinsamen Punkt 25 treffen. Ein weiteres Vorschieben der beiden Bohrungen würde bewirken, daß sich diese gegenseitig beeinflussen, d. h. zu Ausformungen in der jeweils anderen Bohrung führen. Das Drehküken 5, mit einer ersten Durchgangsbohrung 6 bis zur ebenen elliptischen Fläche 20 und einer zweiten, durch das Segment 22 verlängerten Bohrung 3 bis zur gleichen Ebene 20 wird deshalb, da mechanisch durch Ausdrehen nicht herstellbar, als Gußteil oder Einsatzteil in das Drehküken hergestellt, um die spezielle geknickte Bohrungsform zu erhalten. Hierfür wird der Kern des Gußteils oder das Einsatzteil entsprechend der beschriebenen Formgebung der beiden Bohrungen 3, 6 ausgebildet, mit einer gemeinsamen Berührungsebene entlang der ebenen elliptischen Schnittfläche 20 auf der Winkelhalbierenden 21 des Winkels β.

Muß aus technologischen Gründen die Rohrwandung 6 aus einem hochwertigen Material bestehen, ist es aus Kostengründen besonders zweckmäßig, eine gegossene Zylinderbüchse 26 zu verwenden. Diese Zylinderbüchse 26 weist in ihrem inneren Bereich die zuvor beschriebene Rohrgeometrie auf, d. h. eine Innenkontur, die zum einen als innere Zylinderfläche der Innenbohrung 6 des Drehkükens bis zur Schnittebene 20 und zum anderen als Verlängerung der Bohrung 3 in den Segmentabschnitt 22 ebenfalls bis zur Schnittfläche 20, ausgebildet ist. Die Außenkontur 27 der Zylinderbüchse 26 kann durchgehend zylindrisch sein, so daß sie in einer entsprechenden zylindrischen Durchgangsbohrung im Drehküken 5 eingepaßt werden kann. Dabei muß der kleinste mögliche Zylinderdurchmesser auf der Außenkontur 27 größer sein, als das doppelte des größten Radius von der Rohrmittelachse 9 bis zur Rohrwandung des Segments 22 auf der Zylindermantelfläche 14 des Drehkükens 5. Die Zylinderbüchse 26 wird mit einem Kernteil gegossen, welches die Formgebung des zuvor beschriebenen Rohrknies aufweist, mit der gemeinsamen elliptischen Schnittfläche 20 auf der Winkelhalbierenden 21 der beiden Anschlußrohre 3, 6. Die Zylinderbüchse 26 kann jedoch auch als Rohrknie mit abgeknickter Außenkontur in ein Drehküken 5 insgesamt eingegossen werden. Die Zylinderbüchse 26 ließe sich auch aus einem geschnittenen Rohrknie herstellen, welches in ein innen hohles Drehküken einsetzbar wäre.

Wie aus Fig. 1 ersichtlich, ist die dritte Anschlußleitung 12 bei winkliger Abzweigung des Drehkükens 5 geradlinig weitergeführt, wobei die Rohrmittelachse 9 des Drehkükens mit der Rohrmittelachse 28 der dritten Anschlußleitung 12 fluchtet. Der Durchmesser d der dritten Anschlußleitung 12 entspricht demjenigen der beiden Anschlußleitungen 3 und 4. Durch diesen geradlinigen Anschluß der Anschlußleitung 12 zur Durchgangsbohrung 6 des Drehkükens 5 wird ein stoßfreier Übergang der beiden Bohrungen 6, 12 entlang der Zylindermantelfläche 29 erzielt, so daß an dieser Stelle keine Anpassungsmaßnahmen sowohl am Drehküken als auch an der Anschlußleitung des Drehschiebergehäuses 2 zur Anpassung der Bohrungen 6, 12 notwendig sind. Es liegt demnach ein deckungsgleicher Durchgangsquerschnitt an der Zylindermantelfläche 29 vor.

In Fig. 2 ist die geradlinige Durchgangsstellung durch die Drehschieberweiche gezeigt, d. h. die erste Anschlußleitung 3 ist über die Drehkükenbohrung 6 mit der zweiten Anschlußleitung 4 verbunden. Hierzu wurde das Drehküken 5 nach Fig. 1 im Uhrzeigersinn um den Kreismittelpunkt 30 um den Winkel β verdreht, so daß die Zylindermantelfläche 14 in die Öffnung der zweiten Anschlußleitung 4 und die Zylindermantelfläche 29 in die Öffnung der ersten Anschlußleitung 3 gelangt. Die beiden Zylindermantelflächen sind in Fig. 2 mit 14' und 29' gekennzeichnet.

Der Öffnungsbereich auf der Zylindermantelfläche 29' fluchtet bei geradlinigem Durchgang der Drehschieberweiche (Fig. 2) mit der Öffnung der ersten Anschlußleitung 3, d. h., daß die beiden Öffnungsquerschnitte 3, 6 in der Zylindermantelfläche 29' deckungsgleich sind. Dies entspricht der Stellung des Drehkükenübergangs 29 in Fig. 1 zur dritten Anschlußleitung 12.

Um die Anpassung und Konstruktion eines Rohrknies nach Fig. 1 mit der elliptischen ebenen Schnittfläche

4

20 zu erreichen, wurde das Segment 22 im Drehküken 5 als geradlinige Fortsetzung der Bohrung 3 der ersten Anschlußleitung 3 ausgebildet. Dreht man nun dieses Segment 22 aus Fig. 1 um den Kreismittelpunkt 30 und um den Winkel β in die Stellung nach Fig. 2 (Segment 22'), so wandert der obere Schnittpunkt 15 der elliptischen Schnittfläche 20 in Fig. 2 nach unten (Punkt 15') und der untere Schnittpunkt 16 aus Fig. 1 in die obere Stellung (Punkt 16') in Fig. 2. Die beiden seitlichen Punkte 17, 18 bleiben in ihrer horizontalen Lage auf der Rohrmittelachse 9 liegen.

In Fig. 3 ist die Projektion bzw. die Seitenansicht (Blickrichtung: Pfeil 31) der Öffnungsquerschnitte der aus dieser Sicht herzförmigen Zylindermantelfläche 14' und des kreisförmigen Anschlußrohres 6 gezeigt. Hieraus ist ersichtlich, daß an dieser Stelle im Drehschiebergehäuse 2 eine Anpassung der beiden unterschiedlichen Querschnittsübergänge erforderlich ist, um einen stoßfreien Weichendurchgang in beiden Förderrichtungen zu bekommen.

Im oberen seitlichen Bereich, entlang der beiden Segmente 32, ist die Schnittfläche 14' aufgrund der herzähnlichen Form größer als der kreisförmige Querschnitt 33 der Durchgangsbohrung 6 im Drehküken 5. Umgekehrt verläuft in den beiden unteren seitlichen Segmentbereichen 34 einer Zylinderbüchse 35 der kreisförmige Rohrquerschnitt (Kreis 33) der Durchgangsbohrung 6 des Drehkükens 5 außerhalb der Kontur des herzförmigen Durchgangsquerschnitts 14'. In den Bereichen 32, 34 muß deshalb die Anschlußleitung 4 vom Querschnitt 33 an in Pfeilrichtung 31 dem Öffnungsquerschnitt des Segments 22' auf der Ebene 14' angepaßt werden.

Durch diese Ausführungsform wird erreicht, daß auch in der fluchtenden Stellung der Anschlußleitungen 3 und 4 gemäß Fig. 2 ein Materialtransport in beiden Richtungen (Pfeil 10, 11 und 31) erfolgen kann, ohne daß eine Querschnittsänderungen vorhanden sind. Insbesondere gleichen sich die Querschnitte gemäß der Darstellung nach Fig. 3 beim Übergang zwischen der Anschlußleitung 4 und der Zylindermantelfläche 14' in ihrer wirksamen Querschnittsfläche aus, so daß keine Querschnittsveränderung eintritt. Dies wird aus den entsprechenden, nahezu gleichen Flächen der Segmente 32 und der Segmente 34 sichtbar. Die Anpassung des Rohres 4 an den Querschnitt 14' kann auch in Form einer gegossenen Zylinderbüchse 35 erfolgen, die insbesondere aus hochwertigem Material hergestellt sein kann.

Weiterhin ist ein ungehinderter Durchgang ohne Auffütterung der ersten Anschlußleitung 3 auch bei abzweigender Drehschieberweiche zur dritten Anschlußleitung 12 gegeben, d. h. durch die Bildung des Rohrknies im Drehküken 6 wird erfindungsgemäß ein stoßfreier Übergang in allen Richtungen gewährleistet.

Die Erfindung ist nicht auf das beschriebene und dargestellte Ausführungsbeispiel beschränkt.

## Patentansprüche

1. Drehschieberweiche mit einem in einem stationären Gehäuse (2) angeordneten Drehküken (5) mit einem Durchgangsquerschnitt (6) zur Verbindung einer ersten (3) mit einer zweiten (4), mit der ersten fluchtenden Gehäuse-Anschlußleitung (3, 4) und - bei Drehung des Drehkükens (5) - zur Verbindung der ersten mit einer von der ersten Gehäuse-Anschlußleitung (3) winklig abzweigenden dritten Gehäuse-Anschlußleitung (12), wobei in allen Durchgangsstellungen der Drehschieberweiche die Durchgangs-Querschnitte (Durchmesser d) der drei Anschlußleitungen (3, 4, 12) und der Durchgangs-Querschnitt (Durchmesser d) des Drehkükens (5) annähernd gleich sind, dadurch gekennzeichnet, daß zur Bildung einer ebenen, elliptischen Schnittfläche (20) zwischen erster Anschlußleitung (3) und Durchgangsbohrung (6) des Drehkükens (5) bei winkliger Abzweigung des Drehkükens (5) um den von der Durchgangslängsmittelachse (7, 8) abzweigenden Winkel (α) die Drehschiebergehäusebohrung (3) und die Drehküken-Durchgansbohrung (6) ein gemeinsames Rohrknie bilden.

2. Drehschieberweiche nach Anspruch 1, dadurch gekennzeichnet, daß zur Bildung des Rohrknies die Bohrung der zylindrischen ersten Anschlußleitung (3) in einen Segmentbereich (22) des Drehkükens (5) bis zur ebenen elliptischen Schnittfläche (20) auf einer Winkelhalbierenden (21) des durch die Längsmittelachse (7) der ersten Anschlußleitung (3) und die Längsmittelachse (9) der Durchgangsbohrung (6) gebildeten Winkels (β) querschnittsgleichbleibend hineingeführt ist und die mit der ersten Anschlußleitung (3) maßgleiche zylindrische Durchgangsbohrung (6) des Drehkükens (5) ebenfalls an der Schnittfläche (20) ohne Querschnittsveränderung angrenzt.

3. Drehschieberweiche nach Anspruch 1, dadurch gekennzeichnet, daß das Drehküken (5) in einer zylindrischen Durchgangsbohrung (27) eine Zylinderbüchse (26) aufweist, die als Rohrknie (3, 6) mit ebener elliptischer Schnittfläche (20) auf der Winkelhalbierenden (21) des Abzweig-Winkels (β) ausgebildet ist.

4. Drehschieberweiche nach Anspruch 2, dadurch gekennzeichnet, daß die Zylinderbüchse (26) als Gußteil aus einem anderen Werkstoff als das Drehküken (5) ausgebildet ist.

5. Drehschieberweiche nach Anspruch 1, dadurch gekennzeichnet, daß das Rohrknie (3, 6) aus zwei zusammengeschweißten Rohren insbesondere aus hochwertigem Werkstoff wie Cr-Ni-Stahl oder dgl. ausgebildet ist, welches in das Drehküken (5) als Rohrknie eingegossen, eingeklebt oder eingeschweißt wird.

6. Drehschieberweiche nach Anspruch 1, dadurch gekennzeichnet, daß die mit der ersten Anschlußleitung (3) fluchtende zweite Anschlußleitung (4) im Drehkükengehäuse (2) an eine in einer Projektion herzförmige Übergangsfläche (14') zum Drehküken hin angepaßt ist, wobei die in Projektion herzförmige Austrittsöffnung (14') auf der Zylindermantelfläche des Drehkükens (5) auf den kreisförmigen Rohrdurchmesser der Anschlußleitung (4) bzw. der Durchgangsbohrung (6) übergeht und wobei ggf. eine eingegossene Zylinderbüchse (35) aus einem anderen Material als das Drehschiebergehäuse (2) in die zweite Anschlußleitung (4) einsetzbar ist.

7. Drehschieberweiche nach Anspruch 1, dadurch gekennzeichnet, daß die dritte, winklig abzweigende Anschlußleitung (12) im Drehkükengehäuse (2) mindestens im Bereich der Drehküken-Austrittsbohrung geradlinig und mit dieser stoßfrei fluchtend fortgeführt ist zur Bildung eines gemeinsamen Öffnungsquerschnitts (29) mit der runden Bohrung (6) im Drehküken (5).

## Claims

1. Rotary slide valve switch comprising a valve plug (5) disposed in a stationary casing (2) and having a through passage cross-section (6) for connecting a first valve casing duct (3) with a second valve casing duct (4) aligned with the first and, when the rotary plug (5) is rotated, for connecting the first. valve casing duct with a third valve casing duct (12) branching at an angle from the first valve casing duct (3), wherein, in all the through-flow positions of the rotary valve, the passage cross-sections (diameter d) of the three valve ducts (3, 4, 12) and the passage cross-section (diameter d) of the rotary plug (5) are approximately equal, characterized in that, for forming a plane, elliptical intersection face (20) between the first valve casing duct (3) and the through bore (6) of the rotary plug (5) when the rotary plug (5) is switched through the branching angle ($\alpha$) from the through longitudinal central axis (7, 8), the casing bore (3) of the rotary valve and the through bore (6) of the valve plug form a common pipe elbow.

2. Rotary slide valve switch according to claim 1, characterized in that, for forming the pipe elbow, the bore of the cylindrical, first valve casing duct (3) is continued with constant cross-section into a segmental region (22) of the rotary plug (5) as far as the plane, elliptical intersection face (20) on an angle bisector (21) of the angle ($\beta$) formed by the longitudinal central axis (7) of the first valve duct (3) and the longitudinal central axis (9) of the through bore (6), and the cylindrical through bore (6) of the rotary plug (5), of the same dimensions as the first valve duct (3), likewise adjoins the intersection face (20) without any change in cross-section.

3. Rotary slide valve switch according to Claim 1, characterized in that the rotary plug (5) has, in a cylindrical through bore (27), a cylindrical lining (26), which is formed as a pipe elbow (3, 6) with plane, elliptical intersection face (20) on the angle bisector (21) of the branching angle ($\beta$).

4. Rotary slide valve switch according to Claim 2, characterized in that the cylindrical lining (26) is formed as a casting of a different material from the rotary plug (5).

5. Rotary slide valve switch according to Claim 1, characterized in that the pipe elbow (3, 6) is formed of two welded-together tubes, especially of high-quality material such as Cr-Ni steel or the like, which is cast, glued or welded into the rotary plug (5) as a pipe elbow.

6. Rotary slide valve switch according to Claim 1, characterized in that the second valve duct (4) in the valve casing (2), aligned with the first valve duct (3), is adapted to the rotary plug at a transition surface (14'), which is heart-shaped in projection, the heart-shaped in projection outlet opening (14') on the cylindrical surface of the rotary plug (5) forming a transition onto the circular pipe diameter of the valve duct (4) and of the through bore (6) and a cast-in cylindrical lining (35) of a different material from the valve casing (2) being insertable into the second valve duct (4).

6

7. Rotary slide valve switch according to Claim 1, characterized in that the third valve duct (12), branching at an angle in the valve casing (2), is continued in a straight line at least in the region of the rotary plug outlet bore and is aligned smoothly with it, to form a common opening cross-section (29) with the circular bore (6) in the rotary plug (5).

**Revendications**

1. Vanne d'aiguillage rotative, comportant un boisseau rotatif (5) agencé dans un boîtier stationnaire (2), présentant une section transversale de passage (6), pour relier un premier conduit de raccordement du boîtier (3) à un deuxième conduit de raccordement du boîtier (4), aligné avec le premier, et, lors de la rotation du boisseau (5), pour relier le premier conduit de raccordement du boîtier (3) avec un troisième conduit de raccordement du boîtier (12) s'écartant angulairement du premier conduit de raccordement du boîtier (3), les sections transversales de passage (diamètre d) des trois conduits de raccordement (3,4,12) et la section transversale de passage (diamètre d) du boisseau rotatif (5) étant approximativement les mêmes dans toutes les positions de passage de la vanne d'aiguillage rotative,
caractérisée en ce que, pour former une surface de jonction elliptique plane (20) entre le premier conduit de raccordement (3) et le perçage de passage (6) du boisseau rotatif (5), dans le cas d'une déviation angulaire du boisseau rotatif (5) de l'angle ($\alpha$) par rapport à l'axe longitudinal central (7,8) du passage, le perçage du boîtier de la vanne (3) et le perçage de passage (6) du boisseau forment un coude tubulaire commun.

2. Vanne d'aiguillage rotative selon la revendication 1,
caractérisée en ce que, pour former le coude tubulaire, le perçage du premier conduit de raccordement cylindrique (3) est guidé, en conservant une section transversale identique, dans une zone segmentaire (22) du boisseau rotatif (5) jusqu'à la surface de jonction elliptique plane (20) sur une bissectrice (21) de l'angle ($\beta$) formé par l'axe longitudinal central (7) du premier conduit de raccordement (3) et l'axe longitudinal central (9) du perçage de passage (6), et le perçage de passage (6), cylindrique, isométrique au premier conduit de raccordement (3), du boisseau rotatif (5) est de même limitrophe de la surface de jonction (20) sans modification de section transversale.

3. Vanne d'aiguillage rotative selon la revendication 1,
caractérisée en ce que le boisseau rotatif (5) présente, dans un perçage de passage cylindrique (27), un manchon cylindrique (26) qui est réalisé en tant que coude tubulaire (3,6) ayant une surface de jonction elliptique plane (20) sur la bissectrice (21) de l'angle de déviation ($\beta$).

4. Vanne d'aiguillage rotative selon la revendication 2,
caractérisée en ce que le manchon cylindrique (26) est réalisé en tant que pièce coulée en une matière autre que celle du boisseau (5).

5. Vanne d'aiguillage rotative selon la revendication 1,
caractérisée en ce que le coude tubulaire (3,6) est constitué de deux tubes soudés ensemble, en particulier en une matière de haute valeur comme de l'acier au chrome et au nickel ou analogue, et est coulé, collé ou soudé, en tant que coude tubulaire, dans le boisseau rotatif (5).

6. Vanne d'aiguillage rotative selon la revendication 1,
caractérisée en ce que le deuxième conduit de raccordement (4) aligné avec le premier conduit de raccordement (3), dans le boîtier (2) du boisseau rotatif, est adapté à une surface de transition (14') cardioïde en projection, vers le boisseau rotatif, l'ouverture de sortie (14') cardioïde en projection sur la surface d'enveloppe cylindrique du boisseau rotatif (5) passant au diamètre tubulaire circulaire du conduit de raccordement (4) ou du perçage de passage (6) et, le cas échéant, un manchon cylindrique coulé (35) en une autre matière que celle du boîtier (2) de la vanne pouvant être mis en place dans le deuxième conduit de raccordement (4).

7. Vanne d'aiguillage rotative selon la revendication 1,
caractérisée en ce que le troisième conduit de raccordement (12) s'écartant angulairement, dans le boîtier (2) du boisseau rotatif, se poursuit de façon rectiligne au moins dans la zone du perçage de sortie du boisseau rotatif et en étant aligné sans rupture avec celui-ci, pour former une section transversale d'ouverture commune (29) avec le perçage rond (6) dans le boisseau rotatif (5).

Fig 1

Fig 2

Fig 3